# EUROPEAN PATENT APPLICATION

(11) **EP 3 843 177 A1**
(43) Date of publication of application: **30.06.2021**
(21) Application number: 20156843.3
(22) Date of filing: 12.02.2020
(51) Int. Cl.: H01M 2/20

(54) **BUSBAR TO WHICH FUSE HAS BEEN APPLIED**

(30) Priority: 23.12.2019 KR 20190172938
(71) Applicant: DAE SAN ELECTRONICS CO., LTD., Gyeonggi-do 18284 (KR)
(72) Inventor: MA, Sangyoung, 15482 Ansan-si, Gyeonggi-do (KR); YEO, Un Eog, 15317 Ansan-si, Gyeonggi-do (KR)
(74) Representative: Vossius & Partner Patentanwälte Rechtsanwälte mbB

(57) **Abstract**

The present disclosure provides a busbar to which a fuse has been applied including a busbar body for electrically connecting cells of a plurality of batteries, at least one fuse for electrically connecting power supplied from the outside through an independent connection part for each cell of the battery through the busbar body, and formed on the busbar body, and a resin part formed on at least a portion of the fuse.

## Description

This application claims priority to Korean Patent Application No. 10-2019-0172938, filed on 23 December, 2019.

The present disclosure relates to a busbar to which a fuse has been applied.

In general, a busbar is a rod-shaped conductor that enables the electrical connection, such as a wire, and serves as a current path between electrical components.

The busbar is essentially used in an automobile, an airplane, or the like that needs to connect the electrical component in a limited space because it may have high space use efficiency and support the load of the electrical component compared to an existing electric wire.

Meanwhile, the most important object of an electric vehicle is to improve charging efficiency of a battery, and the interest in the busbar for charging the battery is also increasing.

In general, the busbar is manufactured in a single structure with a copper material having high electrical conductivity, and is used by electrically connecting cells of several batteries.

However, there is a problem in that since the conventional busbar is not only susceptible to the occurrence of fire, but also has a structure in which cells of several batteries are integrally connected, the entire battery should be replaced if a problem occurs in the cell of one battery among them. Further, an electrical trouble which may occur in the electrical connection site between the cells of the battery, damage to the connection site due to the dissimilar metal bonding, or the like may occur. Furthermore, there is no example in which a fuse method has been used in the busbar until now.

### [Related Art Documents]

### [Patent Documents]

(Patent Document 0001) Korean Patent Laid-Open Publication No. 10-2014-0146232
(Patent Document 0002) Korean Patent Laid-Open Publication No. 10-2016-0124355

The present disclosure is intended to solve the above problems, and an object of the present disclosure is to provide a busbar to which a fuse has been applied, which may be configured to apply a fuse to a busbar for connecting cells of a plurality of batteries to be electrically conducted and blocked individually to be easily replaced independently, thereby reducing the additional cost due to the entire replacement.

Further, another object of the present disclosure is to provide the busbar to which the fuse has been applied, which may be configured to surround a connection site of the fuse connected to the busbar for connecting the cells of the plurality of batteries with a flame retardant resin, thereby preventing firing due to heat generation, sparks, or the like and damage due to external impact.

Further, still another object of the present disclosure is to provide the busbar to which the fuse has been applied, which may flexibly apply the thickness and shape of the fuse connected to the busbar for connecting the cells of the plurality of batteries considering the ampere of the applied voltage, thereby adjusting the voltage in order to adjust rigidity and disconnection in some cases.

Further, yet another object of the present disclosure is to provide the busbar to which the fuse has been applied, which may manufacture by injection molding a resin part 200 of the busbar, thereby fundamentally preventing breakage such as cracks, cuts, or the like of the melting site due to internal vibration and external impact when mounted inside an electric vehicle and fire due to heat generation, sparks, or the like caused by the above.

Further, still yet another object of the present disclosure is to provide the busbar to which the fuse has been applied, which may coat or plate at least a portion of the fuse 300 with at least one type metal selected from the group consisting of gold (Au), tin (Sn), and nickel (Ni), thereby fundamentally preventing electrical trouble elements which may occur in an electrical connection site.

Further, further object of the present disclosure is to provide the busbar to which the fuse has been applied, which may form the busbar with a non-ferrous metal such as aluminum (Al), copper (Cu), or lead (Pb) through the insert injection, thereby preventing a white rust phenomenon due to the dissimilar metal bonding.

A busbar to which a fuse has been applied according to the present disclosure may include
a busbar body for electrically connecting cells of a plurality of batteries;
at least one fuse for electrically connecting power supplied from the outside through an independent connection part for each cell of the battery through the busbar body,
and formed on the busbar body, and
a resin part formed on at least a portion of the fuse.

In an embodiment of the present disclosure, the fuse may be formed detachably on the busbar body.

In an embodiment of the present disclosure, the fuse may be fused on the busbar body.

In an embodiment of the present disclosure, the fusion may be selected from ultrasonic wave, laser, heat lamination, and tox, but is not limited thereto.

In an embodiment of the present disclosure, the fuse may be screw-coupled to the busbar body.

In an embodiment of the present disclosure, the resin part may be injection molded.

In an embodiment of the present disclosure, the fuse may be formed on the resin part as a metal thin film layer.

Here, in an embodiment of the present disclosure, the metal thin film layer may be formed inside or outside the resin part.

In an embodiment of the present disclosure, the fuse may be formed of a clad, and the clad may include at least one of aluminum and copper.

In an embodiment of the present disclosure, the thickness (t) of the fuse may be adjusted according to the ampere of a voltage.

In an embodiment of the present disclosure, the fuse may include a breakable part, and the breakable part may be divided into at least one.

In an embodiment of the present disclosure, the resin part may be made of a flame retardant material.

In an embodiment of the present disclosure, the resin part may be formed with a structural reinforcement part.

Further, a busbar to which a fuse has been applied according to the present disclosure may include
a busbar body for electrically connecting cells of a plurality of batteries, and
a resin part for electrically connecting power supplied from the outside through an independent connection part for each cell of the battery through the busbar body, and formed on at least a portion of the connection part,
and the resin part may be formed with a metal thin film layer.

In an embodiment of the present disclosure, the metal thin film layer may be formed inside or outside the resin part.

In an embodiment of the present disclosure, the metal thin film layer includes at least one melting part.

The busbar to which the fuse has been applied according to the present disclosure may be configured to apply the fuse to the busbar for connecting the cells of the plurality of batteries to be electrically conducted and blocked individually to be easily replaced independently, thereby reducing the additional cost due to the entire replacement.

Further, the busbar to which the fuse has been applied according to the present disclosure may be configured to surround the connection site of the fuse connected to the busbar for connecting the cells of the plurality of batteries with the flame retardant resin, thereby preventing firing due to heat generation, sparks, or the like and damage due to external impact.

Further, the present disclosure may flexibly apply the thickness and shape of the fuse connected to the busbar for connecting the cells of the plurality of batteries considering the ampere of the applied voltage, thereby adjusting the voltage in order to adjust rigidity and disconnection in some cases.

Further, the present disclosure may manufacture by injection molding the resin part 200 of the busbar, thereby fundamentally preventing breakage such as cracks, cuts, or the like of the melting site due to internal vibration and external impact when mounted inside an electric vehicle and fire due to heat generation, sparks, or the like caused by the above.

Further, the present disclosure may coat or plate at least a portion of the fuse 300 with at least one type metal selected from the group consisting of gold (Au), tin (Sn), and nickel (Ni), thereby fundamentally preventing electrical trouble elements which may occur in the electrical connection site.

Further, the present disclosure may form the busbar with a non-ferrous metal such as aluminum (Al), copper (Cu), or lead (Pb) through the insert injection, thereby preventing a white rust phenomenon due to the dissimilar metal bonding.
FIG. 1 is a front diagram of a busbar to which a fuse has been mounted according to a first embodiment of the present disclosure.
FIG. 2 is a partially enlarged front diagram enlarging a portion of FIG. 1.
FIG. 3 is a partial cross-sectional diagram of A-A' in FIG. 2.
FIG. 4 is a partially enlarged front diagram and a partial cross-sectional diagram showing another example of the busbar to which the fuse has been mounted according to the first embodiment.
FIG. 5 is a front diagram of a busbar to which a fuse has been mounted according to a second embodiment of the present disclosure.
FIG. 6 is a partially enlarged front diagram enlarging a portion of FIG. 5.
FIG. 7 is a coupled state diagram showing a shape in which the fuse is mounted to the busbar according to the second embodiment of the present disclosure.
FIG. 8 is a front diagram of a busbar to which a fuse has been applied according to a third embodiment of the present disclosure.
FIG. 9 is a partially enlarged front diagram enlarging a portion of FIG. 8.
FIG. 10 is a partial cross-sectional diagram of C-C' in FIG. 9.
FIG. 11 is a perspective diagram of the busbar according to the third embodiment of the present disclosure.

Hereinafter, an embodiment of a busbar to which a fuse has been applied according to the present disclosure will be described in detail with reference to the accompanying drawings. It should be noted that in denoting the reference numerals to the components in each drawing, the same components are denoted by the same reference numerals as possible even though they are illustrated in different drawings. Further, in describing an embodiment of the present disclosure, a detailed description of related known configurations or functions will be omitted when it is determined to obscure the understanding of an embodiment of the present disclosure.

In describing the components of an embodiment of the present disclosure, terms such as first, second, A, B, (a), and (b) may be used. These terms are intended to distinguish the component from other components, and the nature, the sequence, the order, or the like of the corresponding components is not limited by the terms. Further, unless otherwise defined, all terms used herein, including technical or scientific terms, have the same meaning as commonly understood by one of ordinary skill in the art to which this disclosure pertains. Terms such as those defined in commonly used dictionaries should be interpreted as having a meaning consistent with the meaning in the context of the relevant art and are not to be interpreted in an idealized or overly formal sense unless explicitly so defined in the present application.

Further, hereinafter, specific embodiments in which a fuse has been applied to a busbar will be described later with reference to the drawings. Here, the fuse may also be formed on or attached to the busbar as a separate independent member to be integrally formed. If the fuse is attached to the busbar to be integrally formed, for example, the fuse may be configured to be connected through a plurality of connection parts branched from the body of the busbar, respectively, to substantially serve as a fuse, respectively, thereby independently enabling electrical connection and disconnection, respectively. Meanwhile, if the fuse is formed on the busbar as a separate member, for example, this may be fused by using laser, ultrasonic wave, heat lamination, tox, or the like or may be detachably mounted by using a separate fastening member such as a separate bolt or nut. Through the above, it is possible to maintain rigidity of the busbar due to external impact or the like. As described above, the fuse may be formed integrally on the busbar or provided in the form of being fused or detached as an independent separate member, and may be configured in the corresponding shape and thickness according to the ampere of the applied voltage.

Further, it is possible to form a resin part of a flame retardant material on the fuse site by the insert injection molding, thereby fundamentally preventing the occurrence of the fire due to sparks, short circuit, or the like in an abnormal phenomenon such as overheat or overload. Further, it is possible to form at least one melting part so that the fuse is easily broken by the short circuit, thereby preventing fire in advance.

The busbar according to the present disclosure may be formed in a shape in which the cross section is bent in a zig-zag shape. That is, the busbar may be a structure in which the fuse and the cells of the battery are alternately arranged to electrically connect them or may also be a structure in which the fuse may be disposed on the rear surface of the site where the cells of the battery are arranged to electrically connect them directly.

Hereinafter, the present disclosure will be described as a first embodiment in which the fuse formed on the busbar is provided to be formed integrally with the busbar and a second embodiment and a third embodiment in which the fuse formed on the busbar is provided to be fused or detachable to the busbar, respectively.

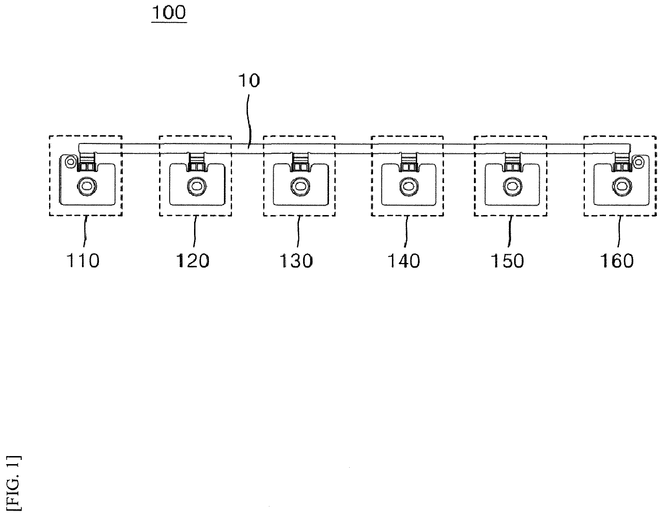

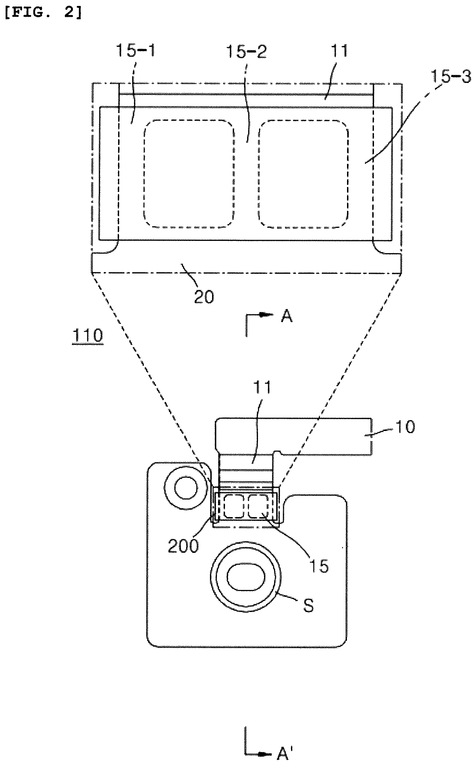

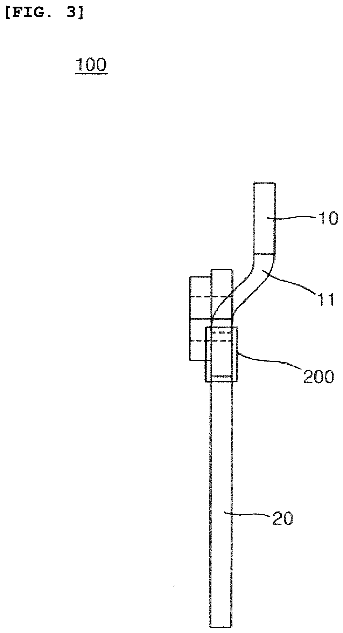

FIG. 1 shows a front diagram of a busbar to which a fuse has been mounted according to a first embodiment of the present disclosure, FIG. 2 shows a partially enlarged front diagram enlarging a portion of A-A' in FIG. 1, and FIG. 3 schematically shows a partial cross-sectional diagram of FIG. 2.

Referring to FIGS. 1 to 3, a busbar 100 according to the present disclosure may include a busbar body 10, a plurality of terminal connection parts 110, 120, 130, 140, 150, 160 formed to be branched from the busbar body 10 to be connected thereto, a breakable part 15 formed on the plurality of terminal connection parts 110, 120, 130, 140, 150, 160, respectively, and a resin part 200 formed in the breakable part 15 site.

Specifically, the busbar body 10 may be formed in a bar shape having a predetermined length and extending to one side. The busbar body 10 may have a curved connection part 11 formed in a shape branched at a constant interval. The busbar body 10 may be manufactured by the injection molding. For example, the busbar body 10 having the above-described shape may be manufactured through injection molding, press, and the like.

The terminal connection parts 110, 120, 130, 140, 150, 160 may include the curved connection part 11 which is bent and extends from the busbar body 10 at a predetermined angle for each site where the terminal connection parts 110, 120, 130, 140, 150, 160 have been formed and a terminal part 20 connected from one side of the curved connection part 11.

The curved connection part 11 may be a form in which the cross section has been curved approximately in an 'S' shape. Since this is formed in a shape bent downward from the busbar body 10 at a predetermined length, it may make it easy to be electrically connected with the cells of the battery disposed at one side. Here, the breakable part 15 for inducing breakage due to a short circuit may be formed on the connection site between the terminal part 20 and the curved connection part 11.

The breakable part 15 may be formed relatively thin as compared with the thickness of the busbar body 10. The breakable part 15 may be formed in a bridge form branched into at least one. For example, the breakable part 15 may include a first melting part 15-1, a second melting part 15-2, and a third melting part 15-3, as shown in FIG. 2. This may be provided to quickly block the electrical connection state by a case where an abnormal phenomenon such as overload of the battery occurs. At this time, the thickness of the breakable part 15 and the number of bridges branched may be adjusted to quickly perform the blocking upon the battery abnormality even while maintaining rigidity of the busbar 100.

Here, the first melting part 15-1, the second melting part 15-2, and the third melting part 15-3 of the breakable part 15 may be a portion that is melted for disconnecting the electrical connection due to the short circuit such as overload of the battery. The thicknesses and the numbers of the first melting part 15-1, the second melting part 15-2, and the third melting part 15-3 of the breakable part 15 may be determined according to the ampere of the applied voltage. That is, the shapes, thicknesses, and the like of the first melting part 15-1, the second melting part 15-2, and the third melting part 15-3 of the breakable part 15 may be adjusted according to the ampere of the voltage. For example, the thickness of the breakable part 15 may be formed relatively thick when the breakable part 15 is installed at a position where the ampere of the applied voltage is provided relatively large, according to a position where the busbar 100 is disposed. At this time, the melted portion of the breakable part 15 may be formed in the form of one or two branched bridges. On the contrary, if the breakable part 15 is installed at a position which the ampere of the voltage applied to the breakable part 15 is provided relatively small, the thickness of the breakable part 15 may be formed relatively thin. At this time, the melted portion of the breakable part 15 may be formed in the form of two or more branched bridges. In some cases, the thickness of the breakable part 15 and the number of bridges branched from the melted portion may be fixed to adjust the ampere of the voltage applied reversely.

Furthermore, the breakable part 15 according to the present disclosure may break only the corresponding breakable part 15 electrically connected if some of the cells of the plurality of batteries which are electrically connected are abnormal. Therefore, the conventional busbar should replace the entire busbar if some batteries are abnormal or the like, thereby incurring the maintenance cost, while the busbar 100 according to the present disclosure has the main feature in that only the corresponding battery may be easily replaced if some batteries are abnormal or the like, thereby reducing the cost.

The resin part 200 may be injection molded and coated in the form of surrounding the breakable part 15 site. The resin part 200 may be manufactured by including a flame retardant material. The resin part 200 may be manufactured by injection molding a flame retardant resin in order to prevent fire due to heat generation, sparks, or the like which may occur at the melting site of the breakable part 15. In one example, the resin part 200 may be manufactured by including polycarbonate but is not limited thereto. Further, according to the present disclosure, the resin part 200 may form a structural reinforcement part (not shown) to determine the dimension of the busbar 100 as well as the breakable part 15 site, thereby also improving the entire rigidity of the busbar 100.

That is, the resin part 200 according to the present disclosure may be manufactured by injection molding, thereby fundamentally preventing breakage such as cracks or cuts of the melting site due to internal vibration and external impact when mounted inside the electric vehicle and fire due to heat generation, sparks, or the like caused by the above.

As described above, according to the first embodiment of the present disclosure, the busbar body 10, the curved connection part 11, the breakable part 15, and the terminal part 20 may be integrally formed. In this case, it is possible to prevent the occurrence of the reduction in durability by the coupling structure.

That is, they may be manufactured integrally, thereby enhancing the mechanical performance. Here, the mechanical performance may refer to the performance of maintaining a coupling force by the coupling force, the vibration, and the like, the performance capable of resisting breakage which may occur from an external force, or the like. Such performance may be advantageous, for example, because the busbar to which the fuse has been applied according to the present disclosure has a higher resistance than that of the busbar manufactured by coupling two members against the vibration of the vehicle or the like in the case of being included in a component of the vehicle or the like. Of course, it may also be expected to enhance insulation. Since the effect which may be expected from this reinforced structure is optional, some or all of the busbar body 10, the curved connection part 11, the breakable part 15, and the terminal part 20 may be determined as a metal material if those skilled in the art prioritize rigidity over insulation, and some of the busbar body 10, the curved connection part 11, the breakable part 15, and the terminal part 20 may be determined as a material such as a resin material if they prioritize the insulation over rigidity. Therefore, the material is optional, and the specific gravity of the insulation and the rigidity may be adjusted by fusing a plurality of materials.

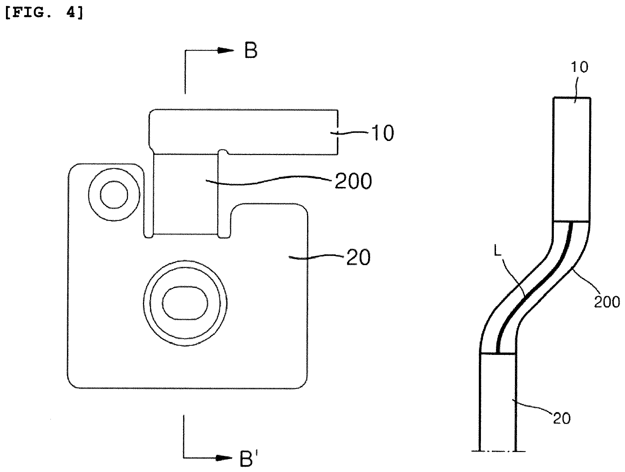

Here, the busbar 100 according to the present disclosure may constitute some or all of the curved connection part 11 and/or the breakable part 15 in the form of a metal thin film (L) to directly form them inside or outside the resin part 200. That is, for example, as shown in FIG. 4, the busbar 100 may be manufactured by disposing and injection molding the metal thin film (L) inside the resin part 200 or formed outside the resin part 200 through coating or the like by separately producing the metal film (L) in advance.

Meanwhile, here, the busbar 100 manufactured by the insert injection may be made of a nonferrous metal, and for example, the nonferrous metal may include aluminum, copper, lead (Pb), or the like.

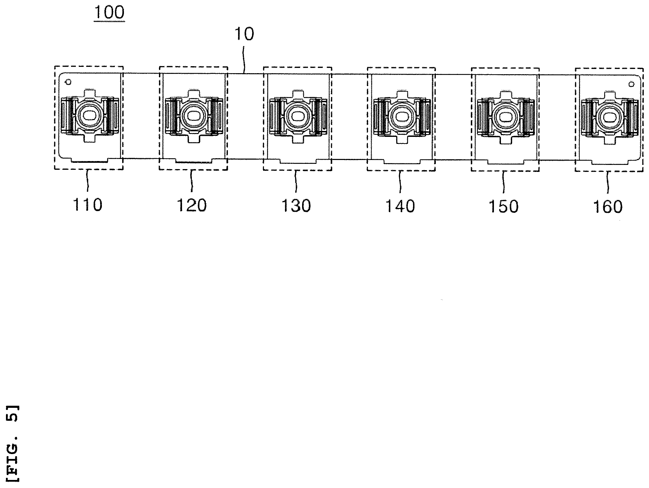

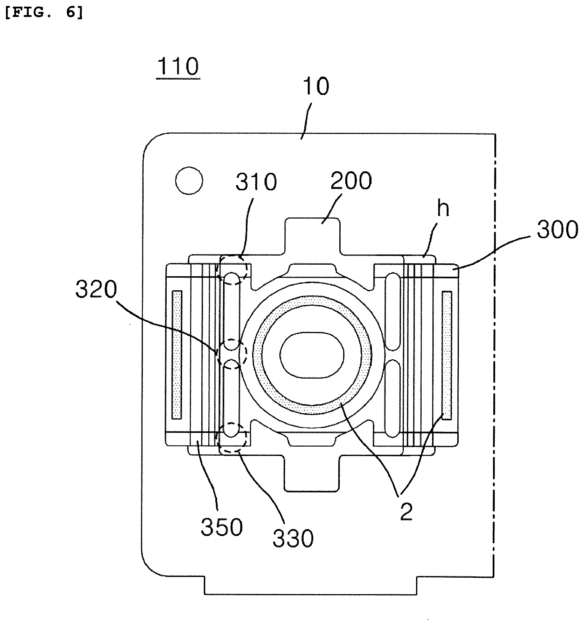

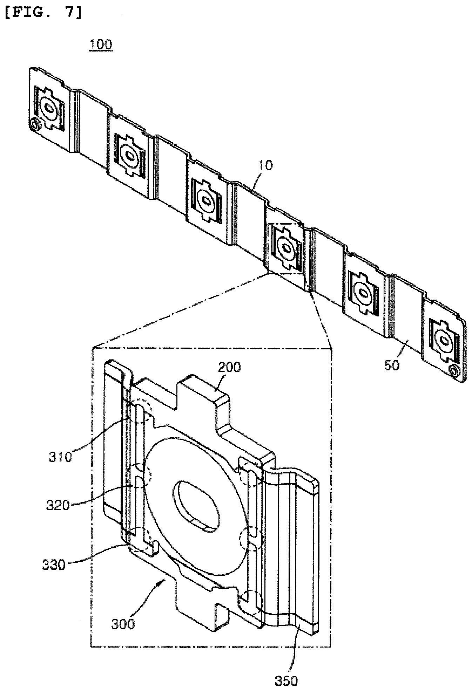

FIG. 5 shows a front diagram of a busbar to which a fuse has been mounted according to a second embodiment of the present disclosure, FIG. 6 shows a partially enlarged front diagram enlarging a portion of FIG. 5, and FIG. 7 schematically shows a coupled state diagram showing a shape in which the fuse is mounted to the busbar according to the second embodiment of the present disclosure.

Referring to FIGS. 5 to 7, the busbar 100 according to the present disclosure may include the busbar body 10, the plurality of terminal connection parts 110, 120, 130, 140, 150, 160 formed to be branched from the busbar body 10 to be connected thereto, a fuse 300 formed on the plurality of terminal connection parts 110, 120, 130, 140, 150, 160, respectively, and the resin part 200 formed at the fuse 300 site.

The busbar body 10 may be formed in a bar shape having a predetermined length and extending to one side. The busbar body 10 may be manufactured by injection molding. For example, the busbar body 10 having the above-described shape may be manufactured through injection molding, press, and the like.

The terminal connection parts 110, 120, 130, 140, 150, 160 may be formed from the busbar body 10. The busbar body 10 may be a form in which the cross section is curved approximately in an 'S' shape. Here, the fuse 300 for inducing breakage due to the short circuit may be fused on the terminal connection parts 110, 120, 130, 140, 150, 160. That is, the fuse 300 may be fused to the busbar body 10 through a fusion part (S). The fusion part (S) may be, for example, performed by the methods of ultrasound wave, laser, heat lamination, and tox but is not limited thereto.

The fuse 300 may be formed in a form in which a curved part 350, which is provided to both side end portions to electrically connect it with the battery, is bent. The fuse 300 may be formed with a first melting part 310, a second melting part 320, and a third melting part 330 so as to perform quick breakage.

The fuse 300 may be formed relatively thin as compared with the thickness of the busbar body 10. The fuse 300 may be formed in a bridge form which is branched into at least one. For example, the fuse 300 may include the first melting part 310, the second melting part 320, and the third melting part 330. This may be provided to quickly block the electrical connection state due to the abnormality such as overload of the battery. At this time, the thicknesses and the numbers of branches of the first melting part 310, the second melting part 320, and the third melting part 330 of the fuse 300 may be adjusted to perform quick blocking upon the abnormality of the battery even while maintaining the rigidity of the busbar 100.

Here, the first melting part 310, the second melting part 320, and the third melting part 330 of the fuse 300 may be a portion which is melted to disconnect the electrical connection in an abnormal situation such as overload of the battery. The thicknesses and the numbers of the first melting part 310, the second melting part 320, and the third melting part 330 of the fuse 300 may be determined according to the ampere of the applied voltage. That is, the shapes, thicknesses, and the like of the first melting part 310, the second melting part 320, and the third melting part 330 of the fuse 300 may be adjusted according to the ampere of the voltage. For example, if the fuse 300 is installed at a position where the ampere of the applied voltage is provided relatively large, the thickness of the fuse 300 or the thicknesses of the first melting part 310, the second melting part 320, and the third melting part 330 of the fuse 300 may be formed relatively thick according to a position where the busbar 100 is installed. On the contrary, if the fuse 300 is installed at a position which the ampere of the voltage applied to the fuse 300 is provided relatively small, the thickness of the fuse 300 or the thicknesses of the first melting part 310, the second melting part 320, and the third melting part 330 of the fuse 300 may be formed relatively thin. In some cases, the thickness and the number of the fuse 300 or those of the first melting part 310, the second melting part 320, and the third melting part 330 of the fuse 300 may be fixed to predetermined conditions in order to adjust the ampere of the reversely applied voltage.

According to the present disclosure, the fuse 300 may be, for example, a clad. The clad may be made of an aluminum material or an aluminum alloy containing aluminum, a copper material or an alloy containing copper, or an alloy thereof.

In some cases, at least one of the fuse 300 may be coated or plated with at least one type metal selected from the group consisting of gold (Au), tin (Sn), and nickel (Ni). Therefore, it is possible to fundamentally prevent the electrical trouble elements which may occur at the electrical connection site, and to prevent the white rust phenomenon due to the dissimilar metal bonding of aluminum (Al), copper (Cu), lead (Pb), or the like.

As described above, it is possible to form the fuse 300 according to the present disclosure or the first melting part 310, the second melting part 320, and the third melting part 330 of the fuse 300 in the thickness, shape, and the like corresponding to the ampere of the voltage to quickly block the electrical connection in an abnormal situation such as overload of the battery, thereby preventing fire or the like.

Furthermore, the fuse 300 according to the present disclosure may be disposed alternately with the battery accommodated in a battery connection unit 50 or disposed at the same position. For example, if the busbar 100 according to the present disclosure has six fuses 300 and five batteries disposed therein, only the corresponding fuse 300 connected electrically may be broken if the abnormal situation occurs in an abnormal situation of some batteries. Therefore, the conventional busbar should replace the entire busbar if the abnormal phenomenon of some batteries occurs, thereby incurring the maintenance cost, while the busbar 100 according to the present disclosure may easily replace only the corresponding battery if the abnormal phenomenon of some batteries or the like occurs, thereby largely reducing the cost.

Meanwhile, the resin part 200 may be injection molded to be coated in the form of surrounding the fuse 300 site. The resin part 200 may be manufactured by including a flame retardant material. The resin part 200 may be manufactured by injection molding a flame retardant resin in order to prevent fire due to heat generation, sparks, or the like which may occur at the first melting part 310, the second melting part 320, and the third melting part 330 sites of the fuse 300. In one example, the resin part 200 may be manufactured by including polycarbonate but is not limited thereto.

Here, the busbar 100 according to the present disclosure may form some or all of the fuses 300 inside or outside the resin part 200 in the form of a metal thin film (L). That is, for example, as shown in FIG. 4, the busbar 100 may be manufactured by disposing and injection molding the metal thin film (L) inside the resin part 200 or formed outside the resin part 200 through coating or the like by separately producing the metal thin film (L) in advance.

Meanwhile, here, the busbar 100 manufactured through the insert injection may be made of a non-ferrous metal. For example, the non-ferrous metal may include aluminum, copper, lead (Pb), or the like.

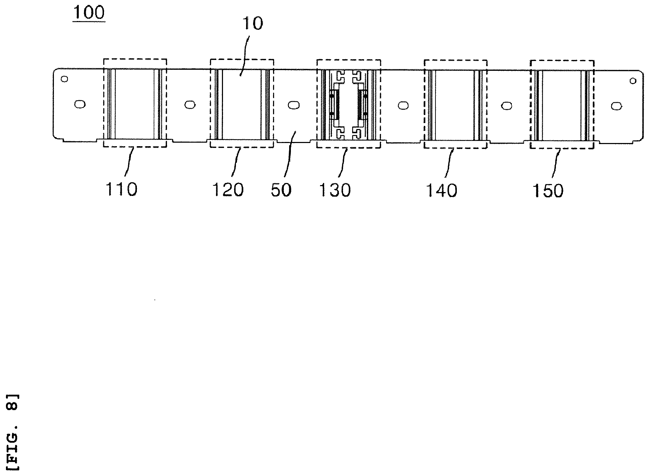

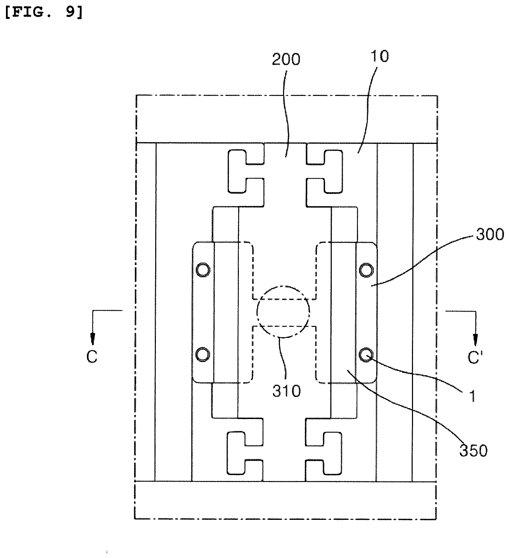

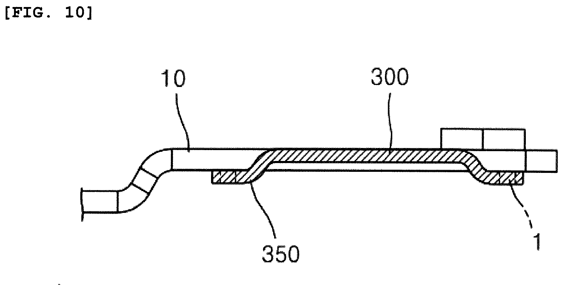

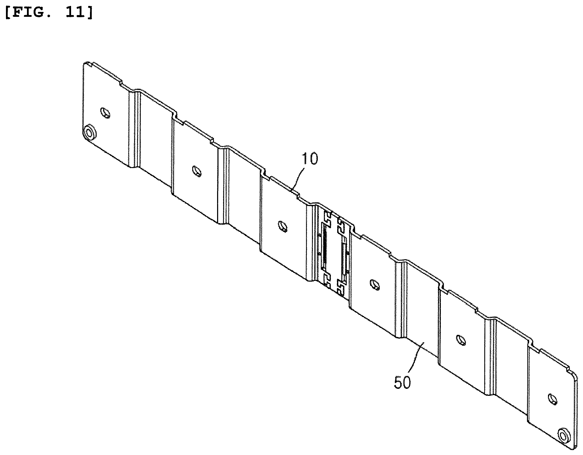

FIG. 8 shows a front diagram of a busbar to which a fuse has been applied according to a third embodiment of the present disclosure, FIG. 9 shows a partially enlarged front diagram enlarging a portion of FIG. 8, FIG. 10 shows a partial cross-sectional diagram of C-C' in FIG. 9, and FIG. 11 schematically shows a perspective diagram of the busbar according to the third embodiment of the present disclosure.

Referring to FIGS. 8 to 10, the busbar 100 according to the present disclosure may include the busbar body 10, the plurality of terminal connection parts 110, 120, 130, 140, 150, 160 formed to be branched from the busbar body 10 to be connected thereto, the fuse 300 coupled to a fastening hole (h) site formed in the plurality of terminal connection part 110, 120, 130, 140, 150, 160, respectively, and the resin part 200 formed on the fuse 300 site.

Hereinafter, parts different from the above-described embodiment will be described, and overlapping parts will be partially omitted.

The fuse 300 may have the melting part 310 formed at the central portion thereof in a bridge form becoming narrower in width, and have a plurality of fastening holes 1 formed in both side end portions thereof, respectively. The fastening hole 1 may be formed to fix the fuse 300 to the busbar 100, and may be fixed through the fastening hole 1 by using a bolt, a nut, or the like. Therefore, only the corresponding fuse 300 in which breakage has occurred among the plurality of fuses 300 may be easily replaced. This is because there is a difference in that a configuration in which the breakable part 15 substantially performing the fuse function is formed integrally with the busbar 100 as in the above-described first embodiment and a configuration in which the fuse 300 is fused on the busbar 100 as in the second embodiment. Here, the busbar 100 and the fuse 300 are not particularly limited thereto as long as they are a structure detachable from each other. For example, not only the above-described screw type fastening method but also various methods such as a hook fastening method by the physical pressing may be included.

Further, in the third embodiment according to the present disclosure, the battery may be connected to the rear surfaces of the terminal connection parts 110, 120, 130, 140, 150, 160, respectively. For example, if the busbar 100 according to the present disclosure has six fuses 300 and six batteries disposed on the back surface of the same position, only the corresponding fuse 300 connected electrically may be broken if the abnormal situation occurs in some batteries. Therefore, the conventional busbar should replace the entire busbar if the abnormal phenomenon of some batteries occurs, thereby incurring the maintenance cost, while the busbar 100 according to the present disclosure may easily replace only the corresponding battery if the abnormal phenomenon of some batteries or the like occurs, thereby largely reducing the cost.

Furthermore, the busbar 100 according to the present disclosure may have a structural reinforcement part 210, which is branched and formed in both side directions, formed on the both end portions of the resin part 200. The shape of the structural reinforcement part 210 is not particularly limited thereto, and may be formed in various shapes and sizes capable of achieving the effect of reinforcing the rigidity of the busbar 100 from vibration or the like due to an external force.

As described above, an embodiment of the busbar to which the fuse has been applied according to the present disclosure has been described in detail with reference to the accompanying drawings. However, it is natural that an embodiment of the present disclosure is not necessarily limited to the above-described embodiment, and various modifications and practices within the equivalent scope may be made by those skilled in the art to which the present disclosure pertains. Therefore, the true scope of the present disclosure should be determined by the claims to be described later.

## Claims

1. A busbar to which a fuse has been applied, comprising:
a busbar body for electrically connecting cells of a plurality of batteries;
at least one fuse for electrically connecting power supplied from the outside through an independent connection part for each cell of the battery through the busbar body, and formed on the busbar body; and
a resin part formed on at least a portion of the fuse.

2. The busbar to which the fuse has been applied, according to claim 1,
wherein the fuse is formed detachably on the busbar body.

3. The busbar to which the fuse has been applied, according to claim 1,
wherein the fuse is fused on the busbar body.

4. The busbar to which the fuse has been applied, according to claim 3,
wherein the fusion is selected from ultrasonic wave, laser, heat lamination, and tox.

5. The busbar to which the fuse has been applied, according to claim 1,
wherein the fuse is screw-coupled to the busbar body.

6. The busbar to which the fuse has been applied, according to any one of claims 1 to 5,
wherein the resin part is injection molded.

7. The busbar to which the fuse has been applied, according to any one of claims 1 to 6,
wherein the fuse is formed on the resin part as a metal thin film layer.

8. The busbar to which the fuse has been applied, according to claim 7,
wherein the metal thin film layer is formed inside or outside the resin part.

9. The busbar to which the fuse has been applied, according to any one of claims 1 to 8,
wherein the fuse is formed of a clad.

10. The busbar to which the fuse has been applied, according to claim 9,
wherein the clad comprises at least one of aluminum and copper.

11. The busbar to which the fuse has been applied, according to any one of claims 1 to 10,
wherein thickness (t) of the fuse is predetermined according to the ampere of a voltage.

12. The busbar to which the fuse has been applied, according to any one of claims 1 to 11,
wherein the fuse comprises a breakable part, and
wherein the breakable part is divided into at least one.

13. The busbar to which the fuse has been applied, according to any one of claims 1 to 12,
wherein the resin part is made of a flame retardant material.

14. The busbar to which the fuse has been applied, according to any one of claims 1 to 13,
wherein the resin part is formed with a structural reinforcement part.

15. A busbar to which a fuse has been applied, comprising:
a busbar body for electrically connecting cells of a plurality of batteries; and
a resin part for electrically connecting power supplied from the outside through an independent connection part for each cell of the battery through the busbar body, and formed on at least a portion of the connection part,
wherein the resin part is formed with a metal thin film layer.

16. The busbar to which the fuse has been applied, according to claim 15,
wherein the metal thin film layer is formed inside or outside the resin part.

17. The busbar to which the fuse has been applied, according to claim 15 or 16,
wherein the metal thin film layer comprises at least one melting part.
